# EUROPÄISCHE PATENTSCHRIFT

(11) **EP 2 724 494 B1**
(45) Veröffentlichungstag und Bekanntmachung des Hinweises auf die Patenterteilung: **18.10.2017**
(21) Anmeldenummer: 12721550.7
(22) Anmeldetag: 21.05.2012
(51) Int. Cl.: H04L 12/24, G05B 19/042, G06F 17/30, H04L 29/08

(54) **VERFAHREN ZUM BETREIBEN EINES FELDGERÄTES UND FELDGERÄT**
METHOD FOR OPERATING A FIELD DEVICE, AND FIELD DEVICE
PROCÉDÉ DE FONCTIONNEMENT D'UN APPAREIL DE TERRAIN, AINSI QU'APPAREIL DE TERRAIN

(30) Priorität: 24.06.2011 DE 102011078030
(43) Veröffentlichungstag der Anmeldung: 30.04.2014
(73) Patentinhaber: Endress+Hauser Flowtec AG, 4153 Reinach (CH)
(72) Erfinder: CHOMIK, Alain, F-68840 Pulversheim (FR); FINK, Nikolai, CH-4147 Aesch (CH); HUFSCHMID, Elmar, 79774 Albbruck (DE)
(74) Vertreter: Andres, Angelika Maria
(86) Internationale Anmeldenummer: PCT/EP2012/059358
(87) Internationale Veröffentlichungsnummer: WO 2012/175258

(56) Entgegenhaltungen:
- WO-A2-03/019883
- DE-A1- 10 151 117
- DE-A1-102009 028 051
- US-A1- 2004 230 582

## Beschreibung

Die vorliegende Erfindung betrifft ein Verfahren zum Betreiben eines, einen Sensor und/oder einen Aktor bildenden Feldgerätes, das über ein Feldbussystem mit mindestens einem weiteren Feldgerät in Kommunikationsverbindung steht, das einen Webserver aufweist und das eine Webbrowser-Webserver-Kommunikationsschnittstelle, über die eine Webbrowser-Webserver-Kommunikation durchführbar ist, aufweist. Ferner betrifft die vorliegende Erfindung ein entsprechend ausgebildetes Feldgerät.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Eine Vielzahl solcher Feldgeräte wird von der Firma Endress + Hauser hergestellt und vertrieben. Solche Feldgeräte sind in modernen Industrieanlagen in der Regel über Feldbussysteme (Profibus®, Foundation® Fieldbus, HART®, Ethernet mit entsprechenden Erweiterungen für die verschiedenen Feldbusse, etc.) mit einer oder mehreren Kommunikationseinheiten verbunden, die beispielsweise in Bezug auf die ihr zugeordneten Feldgeräte eine Prozesssteuerung und/oder weitere Funktionen, wie beispielsweise eine Zustandsüberwachung (engl.: Condition Monitoring), eine Visualisierung, ein Engineering, eine Bedienung, eine Archivierung, ein Asset Management (deutsch: Anlagenmanagement), etc., durchführen.

Feldgeräte der neueren Generation sind in der Regel mit einem Webserver ausgestattet, so dass sie Anfragen einer entsprechenden Kommunikationseinheit im Rahmen einer Webbrowser-Webserver-Kommunikation abwickeln können. Insbesondere kann ein Nutzer unter Verwendung eines einfachen, einen Webbrowser aufweisenden Anzeigegeräts durch Adressierung des jeweils gewünschten Feldgerätes über dessen URL-Adresse (URL: Uniform Resource Locator; deutsch: einheitlicher Quellenanzeiger) im Rahmen einer Webbrowser-Webserver-Kommunikation eine Visualisierung von Informationen dieses Feldgerätes durchführen. Ferner werden in neueren Anlagen mehr und mehr PROFINET Feldbusse eingesetzt (z.B. Ethernet Profibus, Ethernet/IP (Ethernet Industrial Protocol; deutsch: Ethernet Industrie-Protokoll), Ethercat, Modbus-TCP, etc.), so dass Feldgeräte der neueren Generation auch für eine Kommunikation gemäß diesen Protokollen ausgelegt sind.

Darüber hinaus sind übergeordnete Kommunikationseinheiten (mit entsprechenden Anzeigeeinheiten) bekannt, die mit den jeweiligen Feldgeräten direkt oder über ein Gateway in Kommunikationsverbindung stehen und zentral Informationen von mehreren Feldgeräten visualisieren und/oder die zentral eine Benutzer-Bedienoberfläche bereitstellen, über die Parametereinstellungen an mehreren, mit der übergeordneten Kommunikationseinheit in Kommunikationsverbindung stehenden Feldgeräten vornehmbar sind. Solch eine zentrale, übergeordnete Kommunikationseinheit ist in der Druckschrift EP 1 947 805 A1 beschrieben, wobei diese durch ein Zentralsystem zur Bestandsführung gebildet wird. Dabei sind in entsprechende Bestandserfassungsgeräte jeweils Kommunikationseinheiten integriert. Auf diese Weise können jeweils über das Internet Füllstandsdaten oder Druckdaten von den Bestandserfassungsgeräten an das Zentralsystem und Steuerdaten oder Regeldaten von dem Zentralsystem an die jeweiligen Bestandserfassungsgeräte übertragen werden.

Die Vorsehung einer zentralen Kommunikationseinheit zur Visualisierung von Informationen mehrerer Feldgeräte ist dabei mit erhöhten Kosten verbunden. Insbesondere ist in der Regel auf solch einer zentralen Kommunikationseinheit eine entsprechende Software erforderlich, um einen Nutzer bei der Navigation und der Auswahl der Feldgeräte, zu denen er eine Visualisierung von Informationen wünscht, zu unterstützen und um die entsprechenden Informationen von den jeweiligen Feldgeräten abzufragen.

Dementsprechend besteht die Aufgabe der vorliegenden Erfindung darin, ein Verfahren sowie ein entsprechend ausgebildetes Feldgerät bereitzustellen, welches einem Benutzer auf einfache, kostengünstige und flexible Weise die Abfrage von Informationen zu diesem Feldgerät und zu mindestens einem weiteren, in Feldbus-Kommunikationsverbindung stehenden Feldgerät ermöglicht.

Die Aufgabe wird durch ein Verfahren zum Betreiben eines, einen Sensor und/oder einen Aktor bildenden Feldgerätes gemäß Anspruch 1 sowie durch ein, einen Sensor und/oder einen Aktor bildendes Feldgerät gemäß Anspruch 11 gelöst. Vorteilhafte Weiterbildungen der Erfindung sind in den Unteransprüchen angegeben.

Gemäß der vorliegenden Erfindung wird ein Verfahren zum Betreiben eines, einen Sensor und/oder einen Aktor bildenden Feldgerätes bereitgestellt. Das Feldgerät steht dabei über ein Feldbussystem mit mindestens einem weiteren Feldgerät in Feldbus-Kommunikationsverbindung, weist einen Webserver auf und weist eine Webbrowser-Webserver-Kommunikationsschnittstelle, über die eine Webbrowser-Webserver-Kommunikation durchführbar ist, auf. Das Verfahren weist dabei nachfolgende, durch das Feldgerät ausgeführte Schritte auf:
Eine Druckschrift, welche Feldgeräte beschreibt, die an ein Kommunikationssystem mit zentraler Steuerungseinheit angeschlossen sind, ist die Offenlegungsschrift DE10151117A1. Hierbei wird eine Nutzeranfrage über die zentrale Steuerungseinheit an das angefragte Feldgerät weitergeleitet, wobei das feldgerät über eine IP-Adresse adressiert wird.

Die Druckschrift US20040230582 beschreibt eine Einrichtung von elektronischen Geräten zum Bereitstellen von Prozessinformationen welche von Feldgeräten gewonnen werden, wobei die Feldgeräte über einen zentralen Kontroller mit einem Server verbunden sind.

Die Schrift DE102009028051A1 beschreibt eine Vorrichtung zur Bedienung eines Feldgeräts über ein entferntes Terminal, wobei das Feldgerät eine Vorort-Anzeige/Bedienung aufweist.

Die Schrift WO03019883 beschreibt ein Verfahren zum Transfer von Daten von einer entfernten Einrichtung zu einem zentralen Datenspeicher mittels E-Mail-Kommunikation.

Die Vorsehung einer zentralen Kommunikationseinheit zur Visualisierung von Informationen mehrerer Feldgeräte ist dabei mit erhöhten Kosten verbunden. Insbesondere ist in der Regel auf solch einer zentralen Kommunikationseinheit eine entsprechende Software erforderlich, um einen Nutzer bei der Navigation und der Auswahl der Feldgeräte, zu denen er eine Visualisierung von Informationen wünscht, zu unterstützen und um die entsprechenden Informationen von den jeweiligen Feldgeräten abzufragen.

Dementsprechend besteht die Aufgabe der vorliegenden Erfindung darin, ein Verfahren sowie ein entsprechend ausgebildetes Feldgeräte bereitzustellen, welches einem Benutzer auf einfache, kostengünstige und flexible Weise die Abfrage von Informationen zu diesem Feldgerät und zu mindestens einem weiteren, in Feldbus-Kommunikationsverbindung stehenden Feldgerät ermöglicht.

Die Aufgabe wird durch ein Verfahren zum Betreiben eines, einen Sensor und/oder einen Aktor bildenden Feldgerätes gemäß Anspruch 1 sowie durch ein, einen Sensor und/oder einen Aktor bildendes Feldgerät gemäß Anspruch 11 gelöst. Vorteilhafte Weiterbildungen der Erfindung sind in den Unteransprüchen angegeben.

Gemäß der vorliegenden Erfindung wird ein Verfahren zum Betreiben eines, einen Sensor und/oder einen Aktor bildenden Feldgerätes bereitgestellt. Das Feldgerät steht dabei über ein Feldbussystem mit mindestens einem weiteren Feldgerät in direkter Feldbus-Kommunikationsverbindung, indem das Feldgerät einen Client bildet und das mindestens eine weitere Feldgerät einen Server bildet ,weist einen Webserver auf und weist eine Webbrowser-Webserver-Kommunikationsschnittstelle, über die eine Webbrowser-Webserver-Kommunikationdurchführbar ist, auf. Das Verfahren weist dabei nachfolgende, durch das Feldgeräte ausgeführte Schritte auf:
A) Empfangen einer Webbrowser-Anfrage über die Webbrowser-Webserver-Kommunikationsschnittstelle, wobei die Webbrowser-Anfrage zumindest auch Informationen mindestens eines weiteren Feldgerätes betrifft;
B) Abfragen der angefragten Informationen von dem jeweiligen, mindestens einen, weiteren Feldgerät über die Feldbus-Kommunikationsverbindung;
C) Einbinden der von dem mindestens einen, weiteren Feldgerät erhaltenen Informationen in eine Webseite; und
D) Bereitstellen der Webseite über die Webbrowser-Webserver-Kommunikationsschnittstelle.

Vorteilhaft an dem erfindungsgemäßen Verfahren ist dabei, dass durch eine Webbrowser-Webserver-Kommunikation mit einem einzigen Feldgerät auch Informationen von weiteren Feldgeräten bereitgestellt werden können. Bisher war es zwar bei Feldgeräten der neueren Generation möglich, dass ein Nutzer unter Verwendung eines einfachen, einen Webbrowser aufweisenden Anzeigegeräts eine Webbrowser-Webserver-Kommunikationsverbindung mit einem gewünschten Feldgerät herstellte, indem er dessen URL-Adresse eingab. Anschließend konnte er Informationen bezüglich dieses Feldgerätes abfragen. Eine Zusammenstellung von Informationen mehrerer Feldgeräte war dabei aber nicht möglich, so dass die bisherige Beschaffung von Informationen zu mehreren Feldgeräten durch einen Nutzer unter Verwendung solch eines einfachen, einen Webbrowser aufweisenden Anzeigegeräts zeitaufwändig, mühsam und oftmals unübersichtlich war. Dementsprechend kann durch das erfindungsgemäße Verfahren bereits bei Verwendung solch eines einfachen, einen Webbrowser aufweisenden Anzeigegeräts eine umfangreiche Informationsdarstellung zu mehreren Feldgeräten bequem, schnell und übersichtlich erhalten werden, da hierzu nur der Aufbau einer Webbrowser-Webserver-Kommunikationsverbindung zu einem einzigen Feldgerät erforderlich ist. Gegenüber der Verwendung einer zentralen Kommunikationseinheit (beispielsweise ein, an einem Feldbussystem angeschlossenes Gateway, eine an einem Feldbussystem oder an einem übergeordneten Netzwerk angeschlossene, zentrale Bedieneinheit, etc.), die speziell für eine Informationsdarstellung mehrerer Feldgeräte ausgebildet ist, ist dabei der Vorteil, dass das erfindungsgemäße Verfahren auf einem dezentralen Aufbau mit verteilter Intelligenz basiert und die damit verbundenen Vorteile nutzt. Insbesondere sind für das erfindungsgemäße Verfahren keine Anschaffungskosten für eine zentrale Kommunikationseinheit mit entsprechender Software erforderlich. Ferner ist ein, auf dem erfindungsgemäßen Verfahren aufbauendes System robust im Hinblick auf den Ausfall eines Gerätes, da im Falle eines in einem Feldgerät auftretenden Defekts bezüglich der Informationsbeschaffung einfach eine Webbrowser-Webserver-Kommunikationsverbindung zu einem weiteren Feldgerät innerhalb des betreffenden Feldbussegments hergestellt werden kann. Folglich kann ein Nutzer durch das erfindungsgemäße Verfahren schnell eine Übersicht zu mehreren Feldgeräten erhalten, wobei er hierzu nur ein einfach ausgebildetes, einen Webbrowser (mit Webbrowser-Standard-Funktionalität) aufweisendes Anzeigegerät, wie es beispielsweise durch ein Laptop, einen Rechner mit Bildschirm, ein Smartphone, einen PDA (personal digital assistant; deutsch: persönlicher, digitaler Assistent), etc., gebildet wird. Weiterhin vorteilhaft ist, dass Feldgeräte der neuen Generation in der Regel für eine Webbrowser-Webserver-Kommunikation ausgelegt sind und ferner die neueren Feldbus-Protokolle dazu ausgelegt sind, Webseiten unmittelbar oder als Datenpaket in einem Telegramm verpackt über den Feldbus zu übermitteln. Weiterhin ist vorteilhaft, dass Feldbusse der neueren Generation, insbesondere Ethernet-basierte Feldbusse (z.B. Profinet, Ethernet/IP, EtherCAT, Modbus-TCP) keine strikte Master-Slave-Struktur aufweisen, so dass ein angefragtes Feldgerät selbstständig eine Kommunikation initiieren und die jeweils benötigten Informationen direkt von den jeweiligen, weiteren Feldgeräten abfragen kann. Das angefragte Feldgerät, das die Kommunikation initiiert, bildet im Rahmen dieser Abfrage dann (vorübergehend) einen Client, während das weitere Feldgerät einen Server bildet. Dementsprechend sind in den Feldgeräten der neueren Generation die Grundfunktionalitäten zur Durchführung des erfindungsgemäßen Verfahrens bereits vorhanden und es ist lediglich eine entsprechende Anpassung in den Feldgeräten erforderlich, so dass das erfindungsgemäße Verfahren durchführbar ist.

Mit "Feldgerät" wird in dem vorliegenden Zusammenhang ausschließlich auf einen Sensor und/oder einen Aktor Bezug genommen, nicht aber auf Gateways, Linking Devices, etc., die keinen Sensor oder Aktor bilden. Im Rahmen der vorliegenden Beschreibung wird dasjenige Feldgerät, an welches die Webbrowser-Anfrage gerichtet wird (vgl. Schritt A)), als "angefragtes Feldgerät" bezeichnet, insbesondere um dieses von dem mindestens einen weiteren Feldgerät, an welches das "angefragte Feldgerät" die Abfrage (vgl. Schritt B)) stellt, zu unterscheiden. Das Feldbussystem, über welches das angefragte Feldgerät mit dem mindestens einen, weiteren Feldgerät in Kommunikationsverbindung steht, kann einen oder mehrere Feldbusse bzw. Feldbussegmente aufweisen. Dabei ist jedoch vorgesehen, dass die Feldbus-Kommunikationsverbindung zwischen dem angefragten Feldgerät und dem mindestens einen, weiteren Feldgerät ausschließlich über einen oder mehrere Feldbusse verläuft. Der jeweilige Feldbus kann dabei drahtgebunden und/oder drahtlos ausgebildet sein.

Als Webbrowser wird eine Software bezeichnet, durch die Anfragen an einen Webserver stellbar sind und durch die Webseiten darstellbar sind. Solch ein Webbrowser weist zwingend ein visualisierendes Programmmodul zur graphischen Darstellung von Webseiten auf. Als Webserver wird eine (vorliegend auf dem angefragten Feldgerät implementierte) Software bezeichnet, durch die Daten, insbesondere Webseiten, an einen Webclient (der vorliegend durch einen Webbrowser gebildet wird) auf Anfrage desselben hin übermittelbar sind. Als Webbrowser-Webserver-Kommunikation wird eine Kommunikation zwischen einem Webbrowser und einem Webserver bezeichnet. Insbesondere erfolgt diese Kommunikation auf Anwendungsebene gemäß dem http- oder https-Protokoll (http: Hypertext Transfer Protocol; deutsch: Hypertext-Übertragungsprotokoll; https: Hypertext Transfer Protocol Secure; deutsch: sicheres Hypertext-Übertragungsprotokoll). Das Transportprotokoll kann bei der Webbrowser-Webserver-Kommunikation zum Beispiel gemäß TCP/IP erfolgen. Dies ist aber nicht zwingend. Beispielsweise kann auch vorgesehen sein, dass das angefragte Feldgerät unmittelbar gemäß einem anderen Transportprotokoll (z.B. des jeweiligen Feldbusses) kommuniziert und zwischen dem angefragten Feldgerät und dem Webbrowser ein Gateway vorgesehen ist, das eine entsprechende Protokollumsetzung auf das TCP/IP-Protokoll zu der Seite des Webbrowsers hin durchführt. Diese letzte Variante ist insbesondere dann möglich, wenn die Webbrowser-Webbserver-Kommunikation abschnittsweise über einen Feldbus (z.B. Profinet, Ethernet/IP, EtherCAT, Modbus-TCP) verläuft, beispielsweise wenn ein, einen Webbrowser aufweisendes Anzeigegerät über ein Gateway mit dem Feldbus, an dem auch das angefragte Feldgerät angeschlossen ist, verbunden ist.

Allgemein kann vorgesehen sein, dass die Webbrowser-Webserver-Kommunikation über einen vollständig separat von der Feldbus-Kommunikation verlaufenden Kommunikationspfad erfolgt. Bei dieser Variante werden an dem Feldgerät sowohl die Webbrowser-Webserver-Kommunikationsschnittstelle sowie eine separat davon ausgebildete Feldbus-Kommunikationsschnittstelle genützt. Die Webbrowser-Webserver-Kommunikation kann insbesondere über eine Punkt-zu-Punkt-Verbindung (z.B. über Bluetooth, etc.), über ein lokales und/oder auf bestimmte Teilnehmer begrenztes Netz (z.B. LAN (Local Area Network; deutsch: lokales Netzwerk), PAN (Personal Area Network; deutsch: persönliches Netzwerk, etc), oder auch über das "World Wide Web" (WWW; deutsch: weltweites Netz) erfolgen. Bei den verschiedenen Varianten, insbesondere bei Nutzung eines öffentlichen Netzes, kann jeweils eine Beschränkung der Zugangsberechtigung, wie beispielsweise über einen passwortgeschützten Zugang, etc. vorgesehen sein und/oder es kann auch ein direktes Einwählen auf ein bestimmtes Modem oder einen bestimmten Netzwerkknoten durchgeführt werden, so dass ein erhöhter Sicherungsstandard gegenüber einem unberechtigten zugriff erzielt wird. Für die Datenübertragung im Rahmen der Webbrowser-Webserver-Kommunikation können grundsätzlich alle drahtlose oder drahtgebunden Varianten genutzt werden, die eine paketorientierte Kommunikation von Internetprotokollen unterstützen. Insbesondere kann die Datenübertragung über ISDN (Integrated Services Digital Network; deutsch: diensteintegrierendes digitales Netz), eine analoge Telefonverbindung, GSM (Global System for Mobile Communications; deutsch: globales System für mobile Kommunikation), GPRS (General Packet Radio Service; deutsch: allgemeiner, paketorientierter Funkdienst), EDGE (Enhanced Data Rates for GSM Evolution; deutsch: Entwicklung zur Erhöhung der Datenübertragungsrate in GSM-Mobilfunknetzen), DSL (Digital Subscriber Line; deutsch: digitaler Teilnehmeranschluss) oder andere, geeignete Breitverbindungen erfolgen. Alternativ zu der oberhalb erläuterten, separat verlaufenden Feldbus-Kommunikation und Webbrowser-Webserver-Kommunikation kann auch vorgesehen sein, dass die Webbrowser-Webserver-Kommunikation zumindest abschnittsweise über den Feldbus, an dem das betreffende, angefragte Feldgerät angeschlossen ist, erfolgt und dementsprechend an dem angefragten Feldgerät die Webbrowser-Webserver-Kommunikationsschnittstelle gleichzeitig eine Feldbus-Kommunikationsschnittstelle bildet. Beispielsweise wäre dies dann der Fall, wenn der Webbrowser über ein Gateway an dem betreffenden Feldbus angeschlossen ist und die Kommunikation über den Abschnitt zwischen dem Gateway und dem angefragten Feldgerät jeweils über den Feldbus (z.B. Ethernet/IP, Modbus-TCP, oder ggf. auch Profinet oder EtherCAT) erfolgt. Zwischen dem Gateway und dem Webbrowser sind insbesondere die oberhalb, in Bezug auf die Webbrowser-Webserver-Kommunikation erläuterten Varianten möglich. Allgemein kann bei Feldbus-Protokollen, die nicht http- oder https-fähig sind, sowohl für die Kommunikation zwischen dem angefragten Feldgerät und einem Gateway (vgl. Schritt A)), über welches das angefragte Feldgerät mit einem Webbrowser in Kommunikationsverbindung steht, als auch für die Kommunikation zwischen dem angefragten Feldgerät und einem oder mehreren weiteren Feldgeräten (vgl. Schritt B)) vorgesehen sein, dass die jeweiligen Webseiten als Nutzdaten (z.B. als XML-Datei) in einem Telegramm gemäß dem jeweiligen Feldbus-Protokoll übermittelt werden. Die im Rahmen der Webbrowser-Webserver-Kommunikation übertragenen Daten können insbesondere im HTML-Format (Hypertext Markup Language; deutsch: Hypertext-Auszeichnungssprache) vorliegen, wobei auch eine Übertragung von Java-Skripten, Flash-basierten Daten, etc. möglich ist. Insbesondere sind sämtliche Datenformate, die für eine Kommunikation gemäß http oder https verwendbar sind, möglich.

Bei dem Schritt des Empfangens einer Webbrowser-Anfrage (vgl. Schritt A)) handelt es sich um eine Abfrage einer, von dem Webserver bereitgestellten Webseite durch den Webbrowser, wie sie allgemein im Rahmen einer Webbrowser-Webserver-Kommunikation zur Abfrage von Webseiten durchgeführt werden. Dabei ist innerhalb des Webservers vorkonfiguriert, welche Webseiten durch diesen jeweils darstellbar sind und welche Informationen in die jeweiligen Webseiten jeweils einzubinden bzw. darzustellen sind. Der Nutzer kann dabei, wie es auch bei der Abfrage von Webseiten im World Wide Web bekannt ist, auf einer Webseite bestimmte Felder anklicken und sich so weitere Webseiten anzeigen lassen. Durch solch ein Anklicken eines Feldes oder eines Links wird dann die Webbrowser-Anfrage generiert, so dass durch den Webserver eine entsprechende Webseite bereitzustellen ist. Bei dem erfindungsgemäßen Verfahren ist die, auf die gestellte Webbrowser-Anfrage hin (vgl. Schritt A)) bereitzustellende Webseite derart gestaltet (bzw. in dem Webserver so vorkonfiguriert), dass diese auch Informationen mindestens eines weiteren Feldgerätes (ggf. auch zusätzlich zu Informationen zu dem angefragten Feldgerät selbst) umfasst. Um diese Informationen dann in der angefragten Webseite bereitstellen zu können, frägt das angefragte Feldgerät die angefragten Informationen, die das mindestens eine, weitere Feldgerät betreffen, von dem mindestens einen, weiteren Feldgerät ab (vgl. Schritt B)), um sie dann in die angefragte Webseite einzubinden (vgl. Schritt C)) und an den Webbrowser für eine Darstellung der Webseite zu übermitteln (vgl. Bereitstellen der Webseite unter Schritt D)). Im Hinblick auf den Schritt des Einbindens (vgl. Schritt C)) ist zu berücksichtigen, dass die angefragte Webseite Informationen als reine Daten, Webseitenteile und/oder Links (bzw. Referenzen) auf Webseiten des angefragten Feldgerätes oder des mindestens einen, weiteren Feldgerätes aufweisen kann, wie es allgemein auch bei der Darstellung von Webseiten in dem World Wide Web bekannt ist. Wie aus der Beschreibung des erfindungsgemäßen Verfahrens hervorgeht, muss das angefragte Feldgerät zur Ausführung der erfindungsgemäßen Schritte entsprechend ausgebildet bzw. angepasst sein. Entsprechend muss auch das mindestens eine, weitere Feldgerät, von dem die angefragten Informationen abgefragt werden (vgl. Schritt B)) auch zur Bereitstellung und Übermittlung der jeweiligen Informationen ausgebildet bzw. angepasst sein.

Bei dem Schritt des Abfragens (Schritt B)) existieren grundsätzlich verschiedene Varianten, wie bzw. in welchem Format die angefragten Informationen von dem mindestens einen, weiteren Feldgerät an das angefragte Feldgerät über die Feldbus-Kommunikationsverbindung übermittelt werden. Insbesondere können sie als Nutzdaten, wie beispielsweise als XML-Datei (Extensible Markup Language; deutsch: erweiterbare Auszeichnungssprache) bereitgestellt werden, so dass das angefragte Feldgerät diese direkt oder gegebenenfalls weiterverarbeitet in die angefragte Webseite einbinden kann. Die angefragten Informationen können von dem mindestens einen, weiteren Feldgerät über die Feldbus-Kommunikationsverbindung an das angefragte Feldgerät auch in Form einer Webseite oder als Teil einer Webseite übermittelt werden, sofern durch den betreffenden Feldbus eine direkte Übermittlung von Webseiten ermöglicht wird (z.B. bei Ethernet/IP und bei Modbus-TCP der Fall). Ferner kann alternativ auch nur ein Link auf eine Webseite des weiteren Feldgerätes von dem weiteren Feldgerät an das angefragte Feldgerät übermittelt werden. In letzterem Fall wird in die von dem angefragten Feldgerät bereitgestellte Webseite lediglich der Link auf die entsprechende Webseite des weiteren Feldgerätes eingebunden. Dieser letztere Fall setzt jedoch voraus, dass die Feldgeräte über ein http- oder https-fähiges Protokoll miteinander in Kommunikationsverbindung stehen und in demselben Feldbussegment (d.h. nicht voneinander durch Bridges oder Firewalls getrennt) sind.

Sofern in dem vorliegenden Zusammenhang erwähnt ist, dass von dem betreffenden Gerät, Bauteil, der betreffenden Einheit oder dem betreffenden Verfahrensschritt "mindestens ein/eine/eines" vorgesehen ist, so wird auf diese Möglichkeit der Vorsehung von genau einem oder alternativ auch mehreren in der nachfolgenden Beschreibung ebenfalls Bezug genommen, auch wenn dies nicht jedesmal explizit erwähnt wird.

Gemäß einer Weiterbildung wird das Feldbussystem zumindest abschnittsweise durch einen Ethernet-basierten Feldbus gebildet. Insbesondere wird der Kommunikationspfad zwischen dem angefragten Feldgerät und dem mindestens einen weiteren Feldgerät, an welches die Abfrage gestellt wird (vgl. Schritt B)), durch einen Ethernet-basierten Feldbus gebildet. Insbesondere weist das Feldbussystem einen oder mehrere der nachfolgenden, Ethernet-basierten Feldbusse auf: Profinet, Ethernet/IP, EtherCAT und/oder Modbus-TCP. Wie oberhalb erläutert wird, weisen diese Feldbusse keine strikte Master-Slave-Struktur wie viele Feldbusse älterer Generationen auf, so dass das jeweils angefragte Feldgerät (vgl. Schritt A)) (das dann vorübergehend einen Client bildet) selbständig eine Kommunikation initiieren und die jeweils benötigten Informationen direkt von dem mindestens einen weiteren Feldgerät (das dann vorübergehend einen Server bildet) abfragen kann (vgl. Schritt B)). Dementsprechend wird gegenüber einer starren Master-Slave-Struktur eine flexible und effiziente Ausführung der, zwischen den Feldgeräten durchzuführenden Abfragen ermöglicht.

Gemäß einer Weiterbildung werden bei dem Schritt des Einbindens (Schritt C)) durch das angefragte Feldgerät Informationen von mehr als einem Feldgerät in die Webseite eingebunden. Je nach angefragter Webseite, die durch die Webbrowser-Anfrage angefragt wird (vgl. Schritt A)) kann das angefragte Feldgerät dabei ausschließlich Informationen mindestens zweier, weiterer Feldgeräte einbinden oder es kann auch Informationen bezüglich sich selbst und mindestens eines weiteren Feldgerätes einbinden. Der Vorteil bei dieser Weiterbildung ist, dass der Nutzer durch Initiierung nur einer Anfrage über den Webbrowser Informationen zu mehreren Feldgeräten erhalten kann, was im Hinblick auf eine schnelle, unmittelbare und übersichtliche Informationsbeschaffung vorteilhaft ist.

Gemäß einer Weiterbildung umfasst der Schritt des Einbindens eine Verarbeitung der Informationen durch das angefragte Feldgerät. Eine Verarbeitung der Informationen umfasst insbesondere, je nach der angefragten Webseite, die Durchführung von Berechnungen mit den angefragten Informationen, eine Kombination der angefragten Informationen und/oder eine Auswertung der angefragten Informationen, wobei diese Schritte jeweils nur in Bezug auf Informationen eines einzigen Feldgerätes oder auch in Bezug auf Informationen mehrerer Feldgeräte in Kombination durchgeführt werden können. Gemäß dieser Weiterbildung können dementsprechend durch das angefragte Feldgerät Webseiten mit bereits aufgearbeiteten und damit oftmals höherwertigen Informationen bereitgestellt werden.

Gemäß einer Weiterbildung wird die Webbrowser-Anfrage von einem Anzeigegerät aus gestellt, das einen Webbrowser aufweist und das mit dem angefragten Feldgerät in Webbrowser-Webserver-Kommunikationsverbindung steht, und die von dem angefragten Feldgerät bereitgestellte Webseite wird auf einer Anzeige des Anzeigegerätes dargestellt. Wie bereits oberhalb erläutert wird, ist der Vorteil des erfindungsgemäßen Verfahrens, dass zum Stellen der Webbrowser-Anfrage kein speziell ausgebildetes Gerät und/oder Programm erforderlich ist, sondern jegliche, einen Webbrowser aufweisende Einheit, die eine Anzeige aufweist oder mit einer solchen verbunden ist, geeignet ist. Dadurch wird ermöglicht, dass der Nutzer flexibel mit jeglichem Anzeigegerät, welches diese Mindestfunktionen aufweist, sich durch Herstellen einer Webbrowser-Webserver-Kommunikationsverbindung zu einem Feldgerät eines Feldbussystems Informationen zu mehreren Feldgeräten dieses Feldbussystems in entsprechenden (in Bezug auf ihren Inhalt vorkonfigurierten) Webseiten übersichtlich darstellen lassen kann. Das Anzeigegerät kann beispielsweise durch ein Laptop, einen Rechner mit Bildschirm, ein Smartphone, einen PDA, etc., gebildet werden, je nachdem, welche Art von Anzeigegerät für den Nutzer gerade verfügbar ist. Dies ist deshalb möglich, da die für die Durchführung des erfindungsgemäßen Verfahrens erforderlichen, speziellen Funktionalitäten vorzugsweise vollständig innerhalb des jeweiligen Feldgerätes vorgesehen sind. Insbesondere weist das Anzeigegerät auch eine Bedieneinheit (z.B. Tastatur, Tasten, Maus, etc.) auf, über welche ein Nutzer Einstellungen und/oder eine Auswahl vornehmen kann. Darüber hinaus kann ein Anzeigegerät, von dem aus die Webbrowser-Anfrage gestellt wird, aber auch noch weitere Funktionen, beispielsweise im Hinblick auf eine Parametereinstellung von Feldgeräten, eine Zustandsüberwachung von Feldgeräten, etc. ausführen oder zu deren Ausführung ausgebildet sein.

Gemäß einer Weiterbildung steht das Anzeigegerät mit dem Feldbussystem in Kommunikationsverbindung und die Webbrowser-Webserver-Kommunikation erfolgt zumindest abschnittsweise über das Feldbussystem. Insbesondere kann das Anzeigegerät, wie oberhalb erläutert wird, direkt oder über ein Gateway an dem Feldbussystem angeschlossen sein. Diese Weiterbildung ist insbesondere dann vorteilhaft, wenn das Feldbussystem auch die direkte Übertragung von Webseiten ermöglicht, was beispielsweise bei Ethernet/IP und Modbus-TCP der Fall ist. Gemäß einer Weiterbildung ist bei dem angefragten Feldgerät die Webbrowser-Webserver-Kommunikationsschnittstelle separat von einer Feldbus-Kommunikationsschnittstelle, über welche das angefragte Feldgerät an dem Feldbussystem angeschlossen ist, ausgebildet. Wie oberhalb erläutert wird, ermöglicht diese Weiterbildung, dass die Webbrowser-Webserver-Kommunikation über einen vollständig separaten Kommunikationspfad wie die Feldbus-Kommunikation durchgeführt wird.

Allgemein können über die Webbrowser-Webserver-Kommunikationsverbindung auch Funktionen in dem angefragten Feldgerät und/oder in weiteren Feldgeräten ausgelöst werden. Gemäß einer Weiterbildung ist durch einen Nutzer über die Webbrowser-Webserver-Kommunikationsverbindung auch eine Parametereinstellung an dem angefragten Feldgerät von einem, einen Webbrowser aufweisenden Anzeigegerät aus vornehmbar. Ferner ist bei entsprechender Ausbildung der beteiligten Feldgeräte auch möglich, dass durch einen Nutzer über die, zu dem angefragten Feldgerät hergestellte Webbrowser-Webserver-Kommunikationsverbindung von einem, einen Webbrowser aufweisenden Anzeigegerät aus auch einer Parametereinstellung an mindestens einem weiteren Feldgerät, das mit dem angefragten Feldgerät in Feldbus-Kommunikationsverbindung steht, vornehmbar ist. Gemäß einer Weiterbildung sind nachfolgende, durch das angefragte Feldgerät durchgeführte Schritte vorgesehen:
E) Empfangen einer Webbrowser-Anfrage über die Webbrowser-Webserver-Kommunikationsschnittstelle, wobei die Webbrowser-Anfrage zumindest auch eine Parametereinstellung von mindestens einem weiteren Feldgerät betrifft; und
F) Vornahme der Parametereinstellung entsprechend der Webbrowser-Anfrage durch das angefragte Feldgerät an dem jeweiligen, mindestens einen, weiteren Feldgerät über die Feldbus-Kommunikationsverbindung.

Diese Weiterbildung ist insbesondere dann besonders vorteilhaft, wenn die Webbrowser-Webserver-Kommunikation über einen vollständig separaten Kommunikationspfad wie die Feldbus-Kommunikation durchgeführt wird. Die Schritte des Empfangens einer Webbrowser-Anfrage bezüglich der Parametereinstellung sowie der Vornahme der Parametereinstellung (Schritte E) und F)) können dabei zeitlich parallel, vor oder nach den Schritten des Empfangens, Abfragens, Einbindes und Bereitstellens von angefragten Informationen gemäß dem erfindungsgemäßen Verfahren (Schritte A) bis D)) erfolgen. Durch diese Weiterbildung wird auf einfache Weise auch die Vornahme einer Parametereinstellung von mindestens einem, weiteren Feldgerät ermöglicht, ohne dass zu diesem weiteren Feldgerät durch den Nutzer separat eine Webbrowser-Webserver-Kommunikationsverbindung hergestellt werden muss. Ein Beispiel für solch eine Parametereinstellung ist das Zurücksetzen (Reset) des Parameters "Totalizer" (deutsch: Summierer). Eine Variante, solch eine Parametereinstellung an mindestens einem weiteren Feldgerät über eine Webseite, die von dem angefragten Feldgerät bereitgestellt wird, zu ermöglichen, besteht darin, in dieser Webseite einen Banner einzublenden bzw. einzubinden, der von dem mindestens einen weiteren Feldgerät bereitgestellt wird und über den eine Parametereinstellung des mindestens einen, weiteren Feldgerätes ermöglicht wird. Diese Art der Einbindung von Bannern ist unter anderem bei dem Einbinden bzw. Einblenden von Werbebannern in Webseiten des World Wide Web gängig.

Gemäß einer Weiterbildung weist das Verfahren nachfolgende, durch das angefragte Feldgerät durchgeführte Schritte auf:
G) Empfangen einer Webbrowser-Anfrage über die Webbrowser-Webserver-Kommunikationsschnittstelle, wobei die Webbrowser-Anfrage eine Anfrage bezüglich der verfügbaren Feldgeräte (die mit dem angefragten Feldgerät in Feldbus-Kommunikationsverbindung stehen) umfasst; und
H) Bereitstellen einer Webseite über die Webbrowser-Webserver-Kommunikationsschnittstelle, wobei die Webseite eine Liste aufweist, in der zumindest die Feldgeräte angegeben sind, zu denen durch das angefragte Feldgerät Informationen bereitstellbar sind.

Durch die Bereitstellung solch einer Webseite durch das angefragte Feldgerät und durch die Durchführung der Schritte (Schritte G) und H)) dieser Weiterbildung kann ein Nutzer schnell einen Überblick erhalten, zu welchen Feldgeräten er sich über das angefragte Feldgerät Informationen bereitstellen lassen kann. Dabei ist, wie bereits oberhalb erläutert wird, innerhalb des Webservers des angefragten Feldgerätes vorkonfiguriert, dass eine Webseite dieser Art bereitstellbar ist und dass in diese Webseite die Informationen bezüglich der Liste einzubinden bzw. darzustellen sind. Die Schritte des Empfanges der Webbrowser-Anfrage betreffend verfügbare Feldgeräte (Schritt G)) und des Bereitstellens der Webseite mit der Liste (Schritt H)) werden insbesondere zeitlich vor den Schritten A) bis D) des erfindungsgemäßen Verfahrens und/oder den Schritten E) und F) der oberhalb erläuterten Weiterbildung durchgeführt, so dass dem Nutzer vorab die Informationen bezüglich der verfügbaren Feldgeräte zur Verfügung stehen. Durch die Bereitstellung der Liste gewinnt der Nutzer schnell einen Überblick und kann entscheiden, zu welchen Feldgeräten er sich Informationen über das angefragte Feldgerät bereitstellen lassen möchte und/oder an welchen Feldgeräten er Parametereinstellungen über das angefragte Feldgerät vornehmen möchte. Die Feldgeräte, zu denen durch das angefragte Feldgerät Informationen bereitstellbar sind und die in der Liste angegeben sind, umfassen insbesondere das angefragte Feldgeräte sowie weitere Feldgeräte, die mit dem angefragten Feldgerät in Feldbus-Kommunikationsverbindung stehen und die den entsprechenden Dienst bereitstellen, d.h. insbesondere auf Abfrage durch das angefragte Feldgerät die angefragte Informationen über die Feldbus-Kommunikationsverbindung bereitstellen (vgl. Schritt B)). Solch eine Liste wird auch als "LiveList" bezeichnet. In ihr werden insbesondere die Seriennummer und/oder die TAG-Nummer und/oder einen, durch einen Nutzer vergebbaren Namen der jeweils verfügbaren Feldgeräte angegeben, so dass eine eindeutige Zuordnung der jeweiligen Feldgeräte ermöglicht wird. Die TAG-Nummer ermöglicht dabei eine eindeutige Zuordnung des Feldgerätes innerhalb der Anlage, wobei die TAG-Nummer eine Kennung bezüglich der Position des Feldgerätes innerhalb der Anlage und/oder bezüglich der Funktion des Feldgerätes innerhalb der Anlage umfasst. Darüber hinaus können in der Liste auch weitere Informationen zu den verfügbaren Feldgeräten enthalten sein oder Links zu Webseiten, auf denen weitergehende Informationen zu dem jeweiligen Feldgeräte bereitgestellt werden.

Gemäß einer Weiterbildung weisen die (in Schritt A)) angefragten Informationen Messwerte, Statusinformationen (z.B. BAD (deutsch: schlecht), GOOD (deutsch: gut), etc.), Diagnoseinformationen und/oder Alarmzustände zu mindestens einem Feldgerät auf. In Bezug auf diese Informationen werden dann, wie es oberhalb anhand des erfindungsgemäßen Verfahrens erläutert wird, die Schritte des Abfragens (Schritt B)), des Einbindens (Schritt C)) und des Bereitstellens (Schritt D)) durchgeführt.

Die vorliegende Erfindung betrifft ferner ein, einen Sensor und/oder einen Aktor bildendes Feldgerät, das einen Webserver, eine Feldbus-Kommunikationsschnittstelle für den Anschluss an ein Feldbussystems und eine, getrennt von oder integral mit der Feldbus-Kommunikationsschnittstelle ausgebildete Webbrowser-Webserver-Kommunikationsschnittstelle aufweist. Über die Webbrowser-Webserver-Kommunikationsschnittstelle ist dabei eine Webbrowser-Webserver-Kommunikation durchführbar. Das Feldgeräte ist dabei derart ausgebildet, dass durch dieses im Einsatz - nach Empfang einer Webbrowser-Anfrage betreffend zumindest auch Informationen mindestens eines weiteren, im Einsatz an dem gleichen Feldbussystem angeschlossenen und in einer direkten Verbindung stehenden Feldgerätes über die Webbrowser-Webserver-Kommunikationsschnittstelle - wobei das Feldgerät (FG2; FG2'; FG2") einen Client bildet und das mindestens eine weitere Feldgerät (FG1, FG3, FG4; FG1', FG3', FG4'; FG1", FG3", FG4") einen Server bildet eine Abfrage der angefragten Informationen von dem jeweiligen, mindestens einen, weiteren Feldgerät über die Feldbus-Kommunikationsschnittstelle im Rahmen einer Feldbus-Kommunikation durchführbar ist, dass durch das Feldgeräte die von dem mindestens einen, weiteren Feldgerät erhaltenen Informationen in eine Webseite einbindbar sind und dass durch das Feldgerät die Webseite über die Webbrowser-Webserver-Kommunikationsschnittstelle bereitstellbar ist. Durch das erfindungsgemäße Feldgerät werden im Wesentlichen die, in Bezug auf das erfindungsgemäße Verfahren erläuterten Vorteile erzielt. Ferner sind die oberhalb erläuterten Weiterbildungen und Varianten bei dem erfindungsgemäßen Feldgerät in entsprechender Weise realisierbar, wobei bei Verfahrensschritten insbesondere, soweit dies technisch sinnvoll ist, eine Elektronik des Feldgerätes zur Ausführung des jeweiligen Verfahrensschrittes ausgebildet bzw. angepasst ist.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig. 1:: eine schematische Darstellung eines Feldbussystems mit mehreren Feldgeräten zur Veranschaulichung einer Ausführungsform der vorliegenden Erfindung;
- Fig. 2:: eine schematische Darstellung eines zweiten Feldbussystems mit mehreren Feldgeräten zur Veranschaulichung einer zweiten Ausführungsform der vorliegenden Erfindung; und
- Fig. 3:: eine schematische Darstellung eines dritten Feldbussystems mit mehreren Feldgeräten zur Veranschaulichung einer dritten Ausführungsform der vorliegenden Erfindung.

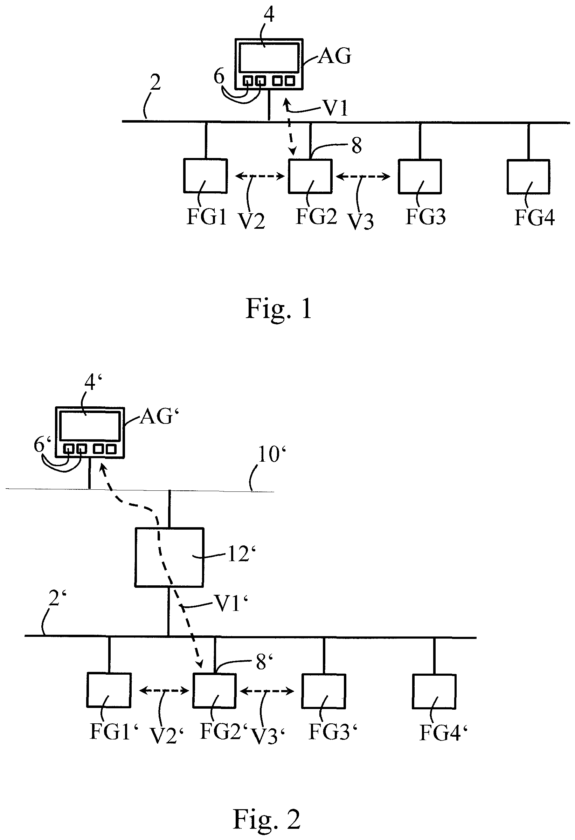

In Fig. 1 ist ein Feldbussystem 2, das durch ein Feldbussegment eines Ethernet/IP-Feldbusses gebildet wird, dargestellt. An dem Feldbusssystem 2 sind vier Feldgeräte FG1, FG2, FG3 und FG4 angeschlossen. Ferner ist ein Anzeigegerät AG direkt an dem Feldbussystem 2 angeschlossen. Das Anzeigegerät AG weist eine Anzeige bzw. ein Display 4 sowie Bedienelemente 6 auf. Auf dem Anzeigegerät AG ist ein Webbrowser implementiert. Das Feldgerät FG2 weist eine Ethernet/IP-Kommunikationsschnittstelle 8 zum Anschluss an einen Ethernet/IP-Feldbus auf. Diese Ethernet/IP-Kommunikationsschnittstelle 8 bildet gleichzeitig eine Webbrowser-Webserver-Kommunikationsschnittstelle sowie eine Feldbus-Kommunikationsschnittstelle und weist die oberhalb, im allgemeinen Beschreibungsteil erläuterten Funktionen auf. Darüber hinaus können an dem Feldbussystem 2 auch noch weitere Geräte, Netzwerke, Feldbusse, etc. angeschlossen sein, wie durch die offenen Enden angedeutet wird.

Das Feldgerät FG2 steht über das Feldbussystem 2 mit den weiteren Feldgeräten FG1, FG3 und FG4 in Feldbus-Kommunikationsverbindung. Das Feldgerät FG2 weist einen Webserver auf. Ein Nutzer, der sich Informationen zu dem Feldgerät FG2 und gegebenenfalls zu weiteren, an dem Feldbussystem 2 angeschlossenen Feldgeräten anzeigen lassen möchte, kann über das Anzeigegerät AG eine Webbrowser-Webserver-Kommunikationsverbindung V1 zu dem (angefragten) Feldgerät FG2 herstellen. Zunächst kann er sich durch das (angefragte) Feldgerät FG2 in einer entsprechenden Webseite eine Liste bereitstellen lassen, in welcher die Feldgeräte angegeben sind, zu denen durch das angefragte Feldgerät FG2 Informationen bereitstellbar sind. Hierzu wählt der Nutzer eine entsprechende, durch das Feldgerät FG2 zur Auswahl bereitgestellte Webseite aus (z.B. durch Anklicken eines Buttons auf der Anzeige 4), so dass eine entsprechende Webbrowser-Anfrage an das angefragte Feldgerät FG2 gesendet wird. Das angefragte Feldgerät FG2 stellt daraufhin die Liste in der ausgewählten Webseite bereit. Vorliegend werden in der Liste die TAG-Nummern und Seriennummern der Feldgeräte FG1, FG2, FG3 und FG4 dargestellt.

Vorliegend entscheidet sich der Nutzer, dass er sich Statusinformationen und Messwerte der weiteren Feldgeräte FG1 und FG3 darstellen lassen möchte. Erwählt hierzu eine entsprechende, durch das angefragte Feldgerät FG2 zur Auswahl bereitgestellte Webseite aus (z.B. durch Anklicken eines Buttons auf der Anzeige 4, so dass eine entsprechende Webbrowser-Anfrage an das angefragte Feldgerät FG2 gesendet wird. Im Rahmen einer Feldbuskommunikation über das Feldbussystem 2 frägt das angefragte Feldgerät FG2 die angefragten Informationen von den weiteren Feldgeräten FG1 und FG3 ab, was in Fig. 1 schematisch durch die Pfeile V2 und V3 dargestellt ist. Im Rahmen dieser Abfrage bildet das angefragte Feldgerät FG2 einen Client, während die weiteren Feldgeräte FG1 und FG3 jeweils Server bilden. Die von den zwei weiteren Feldgeräten FG1 und FG3 im Rahmen dieser Abfrage erhaltenen Informationen bindet das angefragte Feldgerät FG2 in die Webseite ein und stellt diese über die Webbrowser-Webserver-Kommunikationsverbindung V1 an das Anzeigegerät AG bereit. Dabei kann auch vorgesehen sein, dass das angefragte Feldgerät FG2 die von den weiteren Feldgeräten FG1 und FG3 erhaltenen Informationen weiterverarbeitet, insbesondere untereinander und/oder mit Informationen zu dem angefragten Feldgerät FG2 kombiniert. Ferner besteht die Möglichkeit, dass in entsprechender Weise auch über das Feldgerät FG2 Parametereinstellungen an dem/den weiteren Feldgerät(en) FG1 und/oder FG3 vorgenommen werden, wie dies in dem allgemeinen Beschreibungsteil erläutert wird.

Bei der in Fig. 1 dargestellten und oberhalb erläuterten Ausführungsform verläuft die Webbrowser-Webserver-Kommunikation sowie die Feldbus-Kommunikation jeweils vollständig über das Feldbussystem 2. Dementsprechend wird auch an dem angefragten Feldgerät FG2 die Webbrowser-Webserver-Kommunikationsschnittstelle und die Feldbus-Kommunikationsschnittstelle durch ein- und dieselbe Ethernet/IP-Kommunikationsschnittstelle 8 gebildet und das Anzeigegerät AG, das ebenfalls eine Ethernet/IP-Kommunikationsschnittstelle aufweist, ist direkt an dem Feldbussystem 2 angeschlossen.

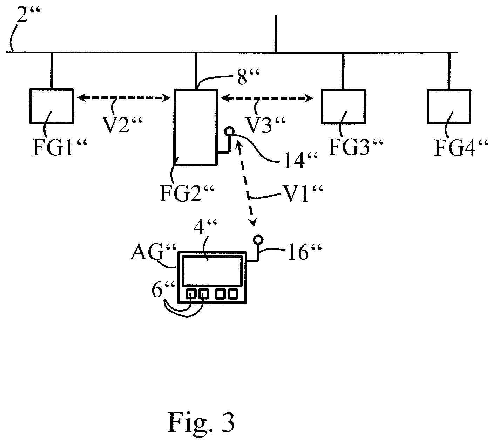

Nachfolgend werden unter Bezugnahme auf die Figuren 2 und 3 weitere Ausführungsformen erläutert, wobei vorwiegend auf die Unterschiede zu der ersten Ausführungsform eingegangen wird. Soweit dies sinnvoll ist, werden für gleiche oder einander entsprechende Bauteile die gleichen Bezugszeichen verwendet, wobei bei der zweiten Ausführungsform jeweils ein Strich und bei der dritten Ausführungsform jeweils zwei Striche an den Bezugszahlen zur Unterscheidung angefügt werden.

Bei der in Fig. 2 dargestellten, zweiten Ausführungsform ist das Anzeigegerät AG' an einem übergeordneten Netzwerk 10' angeschlossen, das über ein Gateway 12' wiederum an dem Feldbussystem 2' angeschlossen ist. Das Feldbussystem 2' ist entsprechend zu der ersten Ausführungsform ausgebildet und es sind daran direkt die Feldgeräte FG1', FG2', FG3' und FG4' angeschlossen. Daneben können an dem übergeordneten Netzwerk 10' sowie an dem Feldbussystem 2' auch noch weitere Geräte, Netzwerke, Feldbusse, etc. angeschlossen sein, wie wiederum durch die offenen Enden angedeutet ist. Entsprechend wie bei der ersten Ausführungsform kann ein Nutzer, der sich Informationen zu dem Feldgerät FG2' und gegebenenfalls zu weiteren, an dem Feldbussystem 2' angeschlossenen Feldgeräten anzeigen lassen möchte, über das Anzeigegerät AG' eine Webbrowser-Webserver-Kommunikationsverbindung V1' zu dem (angefragten) Feldgerät FG2' herstellen. Im Unterschied zu der ersten Ausführungsform verläuft der Kommunikationspfad der Webbrowser-Webserver-Kommunikationsverbindung V1' über das Gateway 12'. Der Kommunikationspfad verläuft insbesondere zum Teil über das übergeordnete Netzwerk 10' sowie zum Teil über das Feldbussystem 2'. Die Feldbus-Kommunikation zwischen dem angefragten Feldgerät FG2' und den weiteren Feldgeräten FG1' und FG3' (vgl. V2' und V3' in Fig. 2) verläuft vollständig über das Feldbussystem 2'.Dementsprechend wird wie bei der zweiten Ausführungsform bei dem angefragten Feldgerät FG2' die Webbrowser-Webserver-Kommunikationsschnittstelle und die Feldbus-Kommunikationsschnittstelle durch ein- und dieselbe Ethernet/IP-Kommunikationsschnittstelle 8' gebildet. Das Anzeigegerät 6' weist eine Kommunikationsschnittstelle zum Anschluss an das übergeordnete (vorliegend drahtgebundene) Netzwerk 10' auf. Es muss nicht zwingend eine Ethernet/IP-Kommunikationsschnittstelle aufweisen. Das Gateway 12' führt die erforderliche Protokollumsetzung zwischen dem übergeordneten Netzwerk 10' und dem Feldbussystem 2' durch. Dies ist insbesondere im Rahmen der Webbrowser-Webserver-Kommunikation erforderlich.

Bei der in Fig. 3 dargestellten, dritten Ausführungsform ist das Feldbussystem 2" entsprechend zu dem Feldbussystem 2 der ersten Ausführungsform ausgebildet. An dem Feldbussystem 2" sind vier Feldgeräte FG1", FG2", FG3" und FG4" angeschlossen. Daneben können an dem Feldbussystem 2" auch noch weitere Geräte, Netzwerke, Feldbusse, etc. angeschlossen sein, was wiederum durch die offenen Enden angedeutet ist. Das (angefragte) Feldgerät FG2" sowie das Anzeigegerät AG" weisen jeweils eine Bluetooth®-Kommunikationsschnittstelle 14" (des Feldgerätes FG2") und 16" (des Anzeigegerätes AG") auf, was in Fig. 3 schematisch durch entsprechende Antennen dargestellt ist. Dementsprechend ist bei der dritten Ausführungsform eine Webbrowser-Webserver-Kommunikationsverbindung V1" drahtlos über Bluetooth® (zwischen dem Webbrowser des Anzeigegeräts AG" und dem Webserver des angefragten Feldgerätes FG2") herstellbar. Entsprechend wie bei der ersten Ausführungsform kann sich ein Nutzer, der sich Informationen zu dem Feldgerät FG2" und gegebenenfalls zu weiteren, an dem Feldbussystem 2" angeschlossenen Feldgeräten anzeigen lassen möchte, über das Anzeigegerät AG" eine Webbrowser-Webserver-Kommunikationsverbindung V1" zu dem (angefragten) Feldgerät FG2" herstellen. Im Unterschied zu der ersten Ausführungsform verläuft der Kommunikationspfad der Webbrowser-Webserver-Kommunikationsverbindung V1" vollständig separat von dem Feldbussystem 2". Die Feldbus-Kommunikation zwischen dem angefragten Feldgerät FG2" und den weiteren Feldgeräten FG1" und FG3" (vgl. V2" und V3" in Fig. 3) verläuft vollständig über das Feldbussystem 2".Dementsprechend wird im Unterschied zu der ersten Ausführungsform bei dem angefragten Feldgerät FG2" die Webbrowser-Webserver-Kommunikationsschnittstelle durch die Bluetooth-Kommunikationsschnittstelle 14" gebildet und die Feldbus-Kommunikationsschnittstelle 8", die durch die Ethernet/IP-Kommunikationsschnittstelle 8" gebildet wird, ist hiervon separat ausgebildet. Das Anzeigegerät 6"muss dabei nicht zwingend eine Ethernet/IP-Kommunikationsschnittstelle aufweisen.

## Patentansprüche

1. Verfahren zum Betreiben eines, einen Sensor und/oder einen Aktor bildenden Feldgerätes (FG2; FG2'; FG2"), das über ein Feldbussystems (2; 2'; 2") mit mindestens einem weiteren Feldgerät (FG1, FG3, FG4; FG1', FG3', FG4'; FG1", FG3", FG4") in Feldbus-Kommunikationsverbindung (V2, V3; V2', V3'; V2", V3") steht, das einen Webserver aufweist und das eine Webbrowser-Webserver-Kommunikationsschnittstelle (8; 8'; 14"), über die eine Webbrowser-Webserver-Kommunikation durchführbar ist, aufweist,
**dadurch gekennzeichnet, dass**
das Feldgerät (FG2; FG2'; FG2") in einer direkten Feldbus-Kommunikationsverbindung (V2, V3; V2', V3'; V2", V3") mit dem mindestens einen weiteren Feldgerät (FG1, FG3, FG4; FG1', FG3', FG4'; FG1", FG3", FG4") steht, indem das Feldgerät (FG2; FG2'; FG2") einen Client bildet und das mindestens eine weitere Feldgerät (FG1, FG3, FG4; FG1', FG3', FG4'; FG1", FG3", FG4") einen Server bildet, wobei das Verfahren nachfolgenden, durch das Feldgerät (FG2; FG2'; FG2") ausgeführte Schritte aufweist:
A) Empfangen einer Webbrowser-Anfrage betreffend zumindest auch Informationen mindestens eines weiteren Feldgerätes (FG1, FG3; FG1', FG3'; FG1", FG3") über die Webbrowser-Webserver-Kommunikationsschnittstelle (8; 8'; 14");
B) Abfragen der angefragten Informationen von dem jeweiligen, mindestens einen, weiteren Feldgerät (FG1, FG3; FG1', FG3; FG1", FG3") über die Feldbus-Kommunikationsverbindung (V2, V3; V2', V3'; V2", V3");
C) Einbinden der von dem mindestens einen, weiteren Feldgeräte (FG1, FG3; FG1', FG3'; FG1", FG3") erhaltenen Informationen in eine Webseite; und
D) Bereitstellen der Webseite über die Webbrowser-Webserver-Kommunikationsschnittstelle (8; 8'; 14"),

2. Verfahren gemäß Anspruch 1, **dadurch gekennzeichnet, dass** das Feldbussystem (2; 2'; 2") zumindest abschnittsweise durch einen Ethernet-basierten Feldbus gebildet wird.

3. Verfahren gemäß Anspruch 1 oder 2, **dadurch gekennzeichnet, dass** bei dem Schritt des Einbindens durch das angefragte Feldgerät (FG2; FG2'; FG2") Informationen von mehr als einem Feldgerät in die Webseite eingebunden werden.

4. Verfahren gemäß einem der vorangehenden Ansprüche, **dadurch gekennzeichnet, dass** der Schritt des Einbindens eine Verarbeitung der Informationen durch das angefragte Feldgerät (FG2; FG2'; FG2") umfasst.

5. Verfahren gemäß einem der vorangehenden Ansprüche, **dadurch gekennzeichnet, dass** die Webbrowser-Anfrage von einem Anzeigegerät (AG; AG'; AG") aus gestellt wird, das einen Webbrowser aufweist und das mit dem angefragten Feldgeräte (FG2; FG2'; FG2") in Webbrowser-Webserver-Kommunikationsverbindung (V1; V1'; V1") steht, und dass die von dem angefragten Feldgerät (FG2; FG2'; FG2") bereitgestellte Webseite auf einer Anzeige (4; 4'; 4") des Anzeigegerätes (AG; AG'; AG") dargestellt wird.

6. Verfahren gemäß Anspruch 5, **dadurch gekennzeichnet, dass** das Anzeigegerät (AG; AG') mit dem Feldbussystems (2; 2') in Kommunikationsverbindung steht und die Webbrowser-Webserver-Kommunikation zumindest abschnittsweise über das Feldbussystems (2; 2') erfolgt.

7. Verfahren gemäß einem der vorangehenden Ansprüche, **dadurch gekennzeichnet, dass** bei dem angefragten Feldgeräte (FG2") die Webbrowser-Webserver-Kommunikationsschnittstelle (14") separat von einer Feldbus-Kommunikationsschnittstelle (8"), über welche das angefragte Feldgerät (FG2") an dem Feldbussystem (2") angeschlossen ist, ausgebildet ist.

8. Verfahren gemäß einem der vorangehenden Ansprüche, **gekennzeichnet durch** nachfolgende, durch das angefragte Feldgerät (FG2; FG2'; FG2") durchgeführte Schritte:
E) Empfangen einer Webbrowser-Anfrage betreffend zumindest auch eine Parametereinstellung von mindestens einem weiteren Feldgerät (FG1, FG3; FG1', FG3'; FG1", FG3") über die Webbrowser-Webserver-Kommunikationsschnittstelle (8; 8'; 14"); und
F) Vornahme der Parametereinstellung entsprechend der Webbrowser-Anfrage durch das angefragte Feldgeräte (FG2; FG2'; FG2") an dem jeweiligen, mindestens einen, weiteren Feldgerät (FG1, FG3; FG1', FG3'; FG1", FG3") über die Feldbus-Kommunikationsverbindung (V2, V3; V2', V3'; V2", V3").

9. Verfahren gemäß einem der vorangehenden Ansprüche, **gekennzeichnet durch** nachfolgende, durch das angefragte Feldgerät (FG2; FG2': FG2") durchgeführte Schritte:
G) Empfangen einer Webbrowser-Anfrage betreffend verfügbare Feldgeräte über die Webbrowser-Webserver-Kommunikationsschnittstelle (8; 8'; 14"); und
H) Bereitstellen einer Webseite mit einer Liste über die Webbrowser-Webserver-Kommunikationsschnittstelle (8; 8'; 14"), wobei in der Liste zumindest die Feldgeräte angegeben sind, zu denen durch das angefragte Feldgerät (FG2; FG2'; FG2") Informationen bereitstellbar sind.

10. Verfahren gemäß einem der vorangehenden Ansprüche, **dadurch gekennzeichnet, dass** die angefragten Informationen Messwerte, Statusinformationen, Diagnoseinformationen und/oder Alarmzustände zu mindestens einem Feldgerät aufweisen.

11. Ein, einen Sensor und/oder einen Aktor bildendes Feldgerät, das einen Webserver, eine Feldbus-Kommunikationsschnittstelle (8; 8'; 8") für den Anschluss an ein Feldbussystem (2; 2'; 2") und eine, getrennt von oder integral mit der Feldbus-Kommunikationsschnittstelle (8; 8'; 8") ausgebildete Webbrowser-Webserver-Kommunikationsschnittstelle (8; 8'; 14") aufweist, wobei über die Webbrowser-Webserver-Kommunikationsschnittstelle (8; 8'; 14") eine Webbrowser-Webserver-Kommunikation durchführbar ist,
**dadurch gekennzeichnet, dass**
das Feldgerät (FG2; FG2'; FG2") derart ausgebildet ist, dass durch dieses im Einsatz - nach Empfang einer Webbrowser-Anfrage betreffend zumindest auch Informationen mindestens eines weiteren, im Einsatz an dem gleichen Feldbussystem (2; 2'; 2") angeschlossenen und in einer direkten Verbindung stehenden Feldgerätes (FG1, FG3; FG1', FG3'; FG1", FG3") über die Webbrowser-Webserver-Kommunikationsschnittstelle (8; 8'; 14") - eine Abfrage der angefragten Informationen von dem jeweiligen, mindestens einen, weiteren Feldgeräte (FG1, FG3; FG1', FG3'; FG1", FG3") über die Feldbus-Kommunikationsschnittstelle (8; 8'; 8") im Rahmen einer Feldbus-Kommunikation durchführbar ist, dass durch das Feldgerät (FG2; FG2'; FG2") die von dem mindestens einen, weiteren Feldgerät (FG1, FG3; FG1', FG3'; FG1", FG3") erhaltenen Informationen in eine Webseite einbindbar sind und dass durch das Feldgerät (FG2; FG2'; FG2") die Webseite über die Webbrowser-Webserver-Kommunikationsschnittstelle (8; 8'; 14") bereitstellbar ist, wobei das Feldgeräte (FG2; FG2'; FG2") einen Client bildet und das mindestens eine weitere Feldgerät (FG1, FG3, FG4; FG1', FG3', FG4', FG1", FG3", FG4") einen Server bildet.

## Claims

1. Procedure for operating a field device (FG2 ; FG2' ; FG2"), forming a sensor and/or an actuator, said field device having a fieldbus communication connection (V2, V3 ; V2', V3' ; V2", V3") with at least one other field device (FG1, FG3, FG4 ; FG1', FG3', FG4'; FG1", FG3", FG4") via a fieldbus system (2; 2'; 2"), which has a web server and which has a web browser/web server communication interface (8 ; 8' ; 14") via which communication between a web browser and a web server can be implemented,
**characterized in that**
the field device (FG2 ; FG2' ; FG2") has a direct fieldbus communication connection (V2, V3 ; V2', V3' ; V2", V3") with the at least one other field device (FG1, FG3, FG4 ; FG1', FG3', FG4' ; FG1", FG3", FG4") by the field device (FG2; FG2'; FG2") forming a client and the at least one other field device (FG1, FG3, FG4; FG1', FG3', FG4'; FG1", FG3", FG4") forming a server,
wherein the procedure comprises the following steps, which are executed by the field device (FG2 ; FG2'; FG2"):
A) Receipt of a web browser request regarding at least also information of at least one other field device (FG1, FG3 ; FG1', FG3' ; FG1", FG3") via the web browser/web server communication interface (8 ; 8' ; 14"),
B) Interrogation of the requested information from the specific, at least one, additional field device (FG1, FG3 ; FG1', FG3' ; FG1", FG3") via the fieldbus communication connection (V2, V3 ; V2', V3'; V2", V3"),
C) Incorporation of the information, received from the at least one additional field device (FG1, FG3 ; FG1', FG3'; FG1", FG3") into a website, and
D) Provisioning of the website via the web browser/web server communication interface (8 ; 8' ; 14").

2. Procedure as claimed in Claim 1, **characterized in that** the fieldbus system (2 ; 2' ; 2") is at least partially formed by an Ethernet-based fieldbus.

3. Procedure as claimed in Claim 1 or 2, **characterized in that,** during the incorporation step, information from more than one field device is incorporated into the website by the contacted field device (FG2 ; FG2' ; FG2").

4. Procedure as claimed in one of the previous claims, **characterized in that** the incorporation step involves the processing of information by the contacted field device (FG2 ; FG2'; FG2").

5. Procedure as claimed in one of the previous claims, **characterized in that** the web browser request is made from a display device (AG ; AG'; AG"), which has a web browser and has a web browser/web server communication connection (V1 ; V1' ; V1 ") with the contacted field device (FG2 ; FG2'; FG2"), and **in that** the website provided by the contacted field device (FG2; FG2' ; FG2") is presented on a display (4 ; 4'; 4") of the display device (AG ; AG'; AG").

6. Procedure as claimed in Claim 5, **characterized in that** the display device (AG ; AG') has a communication connection with the fieldbus system (2 ; 2') and the web browser/web server communication takes place at least partially via the fieldbus system (2 ; 2').

7. Procedure as claimed in one of the previous claims, **characterized in that** in the case of the contacted field device (FG2"), the web browser/web server communication interface (14") is designed separately from a fieldbus communication interface (8") via which the contacted field device (FG2") is connected to the fieldbus system (2").

8. Procedure as claimed in one of the previous claims, **characterized by** the following steps that are performed by the contacted field device (FG2 ; FG2'; FG2"):
E) Receipt of a web browser request concerning also at least one parameter setting of at least one other field device (FG1, FG3 ; FG1', FG3' ; FG1", FG3") via the web browser/web server communication interface (8 ; 8' ; 14"), and
F) Execution of the parameter setting in accordance with the web browser request by the contacted field device (FG2 ; FG2' ; FG2") at the at least one other field device (FG1, FG3 ; FG1', FG3' ; FG1", FG3") via the fieldbus communication connection (V2, V3 ; V2', V3'; V2", V3").

9. Procedure as claimed in at least one of the previous claims, **characterized by** the following steps that are performed by the contacted field device (FG2 ; FG2'; FG2"):
G) Receipt of a web browser request concerning available field devices via the web browser/web server communication interface (8 ; 8' ; 14"), and
H) Provisioning of a web site with a list via the web browser/web server communication interface (8 ; 8' ; 14"), wherein the list contains at least the field devices for which the contacted field device (FG2 ; FG2' ; FG2") can provide information.

10. Procedure as claimed in one of the previous claims, **characterized in that** the requested information comprises measured values, status information, diagnostic information and/or alarm states for at least one field device.

11. A field device forming a sensor and/or an actuator, which has a web server, a fieldbus communication interface (8 ; 8' ; 8") for the connection to a fieldbus system (2 ; 2' ; 2") and a web browser/web server communication interface (8 ; 8' ; 14") that is formed separately from or integrally with the fieldbus communication interface (8 ; 8' ; 8"), wherein web browser/web server communication can be performed via the web browser/web server communication interface (8 ; 8' ; 14"),
**characterized in that**
the field device (FG2 ; FG2' ; FG2") is designed in such a way that during operation - and following the receipt of a web browser request concerning also at least information of at least one other field device (FG1, FG3 ; FG1', FG3' ; FG1", FG3") which, during operation, is connected to the same fieldbus system (2 ; 2' ; 2") and is directly linked via the web browser/web server communication interface (8 ; 8' ; 14") - said field device can query the requested information from the at least one other field device (FG1, FG3 ; FG1', FG3' ; FG1", FG3") via the fieldbus communication interface (8 ; 8' ; 8") within the framework of a fieldbus communication,
**in that** the information received from the at least one other field device (FG1, FG3 ; FG1', FG3' ; FG1", FG3") can be incorporated into a website by the field device (FG2 ; FG2'; FG2"),
and **in that** the website can be provisioned by the field device (FG2 ; FG2' ; FG2") via the web browser/web server communication interface (8 ; 8' ; 14"), wherein the field device (FG2; FG2' ; FG2") forms a client and the at least one other field device (FG1, FG3 ; FG1', FG3'; FG1", FG3") forms a server.

## Revendications

1. Procédé destiné à l'exploitation d'un appareil de terrain (FG2 ; FG2' ; FG2") formant un capteur et/ou un actionneur, lequel appareil est en liaison de communication de bus de terrain (V2, V3 ; V2', V3' ; V2", V3") avec au moins un autre appareil de terrain (FG1, FG3, FG4 ; FG1', FG3', FG4' ; FG1", FG3", FG4") via un système de bus de terrain (2 ; 2' ; 2"), qui comporte un serveur Web et une interface de communication serveur Web - navigateur Web (8 ; 8' ; 14"), par l'intermédiaire de laquelle une communication entre un serveur Web et un navigateur Web est réalisable,
**caractérisé**
**en ce que** l'appareil de terrain (FG2 ; FG2' ; FG2") est en liaison de communication de bus de terrain (V2, V3 ; V2', V3' ; V2", V3") directe avec l'au moins un autre appareil de terrain (FG1, FG3, FG4 ; FG1', FG3', FG4' ; FG1", FG3", FG4"), **en ce que** l'appareil de terrain (FG2 ; FG2' ; FG2") forme un client et l'au moins un autre appareil de terrain (FG1, FG3, FG4 ; FG1', FG3', FG4' ; FG1", FG3", FG4") forme un serveur,
le procédé comprenant les étapes suivantes, exécutées par l'appareil de terrain (FG2 ; FG2' ; FG2") :
A) Réception d'une demande via navigateur Web concernant au moins également les informations d'au moins un autre appareil de terrain (FG1, FG3 ; FG1', FG3' ; FG1 ", FG3") via l'interface de communication serveur Web - navigateur Web (8 ; 8'; 14"),
B) Interrogation des informations sollicitées concernant l'au moins un autre appareil de terrain (FG1, FG3 ; FG1', FG3' ; FG1", FG3") respectif via la liaison de communication de bus de terrain (V2, V3 ; V2', V3' ; V2", V3"),
C) Intégration dans une page Web des informations reçues par l'au moins un autre appareil de terrain (FG1, FG3 ; FG1', FG3' ; FG1", FG3"), et
D) Mise à disposition de la page Web par l'intermédiaire de l'interface de communication serveur Web - navigateur Web (8 ; 8' ; 14").

2. Procédé selon la revendication 1, **caractérisé en ce que** le système de bus de terrain (2 ; 2' ; 2") est formé au moins en partie par un bus de terrain basé sur Ethernet.

3. Procédé selon la revendication 1 ou 2, **caractérisé en ce que** lors de l'étape de l'intégration des informations de plus d'un appareil de terrain sont intégrées dans la page Web par l'appareil de terrain (FG2 ; FG2' ; FG2") sollicité.

4. Procédé selon l'une des revendications précédentes, **caractérisé en ce que** l'étape de l'intégration comprend un traitement des informations par l'appareil de terrain (FG2 ; FG2' ; FG2") sollicité.

5. Procédé selon l'une des revendications précédentes, **caractérisé en ce que** la demande du navigateur Web est émise par un appareil d'affichage (AG ; AG' ; AG"), qui comporte un navigateur Web et qui est en liaison de communication navigateur Web - serveur Web (V1 ; V1' ; V1 ") avec l'appareil de terrain (FG2 ; FG2' ; FG2") sollicité, et **en ce que** la page Web mise à disposition par l'appareil de terrain (FG2 ; FG2' ; FG2") sollicité est représentée sur un affichage (4 ; 4' ; 4") de l'appareil d'affichage (AG ; AG' ; AG").

6. Procédé selon la revendication 5, **caractérisé en ce que** l'appareil d'affichage (AG ; AG') est en liaison de communication avec le système de bus de terrain (2 ; 2') et que la communication navigateur Web - serveur Web s'effectue au moins partiellement par l'intermédiaire du système de bus de terrain (2 ; 2').

7. Procédé selon l'une des revendications précédentes, **caractérisé en ce que** pour l'appareil de terrain (FG2") sollicité l'interface de communication navigateur Web - serveur Web (14") est conçue séparément d'une interface de communication de bus de terrain (8"), à travers laquelle l'appareil de terrain (FG2") sollicité est raccordé au système de bus de terrain (2").

8. Procédé selon l'une des revendications précédentes, **caractérisé par** les étapes suivantes, exécutées par l'appareil de terrain (FG2 ; FG2' ; FG2") sollicité :
E) Réception d'une demande via navigateur Web concernant au moins également un réglage de paramètre d'au moins un autre appareil de terrain (FG1, FG3 ; FG1', FG3' ; FG1 ", FG3") via l'interface de communication navigateur Web - serveur Web (8 ; 8' ; 14"), et
F) Exécution du réglage de paramètre conformément à la demande via navigateur Web par l'appareil de terrain (FG2 ; FG2' ; FG2") sollicité sur l'au moins un autre appareil de terrain (FG1, FG3 ; FG1', FG3' ; FG1", FG3") respectif via la liaison de communication de bus de terrain (V2, V3 ; V2', V3' ; V2", V3").

9. Procédé selon l'une des revendications précédentes, **caractérisé par** les étapes suivantes, exécutées par l'appareil de terrain (FG2 ; FG2' ; FG2") sollicité :
G) Réception d'une demande via navigateur Web concernant les appareils de terrain disponibles via l'interface de communication serveur Web / navigateur Web (8 ; 8' ; 14"), et
H) Mise à disposition d'une page Web avec une liste sur l'interface de communication serveur Web / navigateur Web (8 ; 8' ; 14"), étape pour laquelle sont indiquées dans la liste au moins les appareils de terrain pour lesquels des informations peuvent être mises à disposition par l'appareil de terrain (FG2 ; FG2' ; FG2") sollicité.

10. Procédé selon l'une des revendications précédentes, **caractérisé en ce que** les informations sollicitées comportent des valeurs mesurées, des informations d'état, des informations de diagnostic et/ou des états d'alarme concernant au moins un appareil de terrain.

11. Un appareil de terrain formant un capteur et/ou un actionneur, qui comporte un serveur Web, une interface de communication serveur Web / navigateur Web (8 ; 8' ; 8") pour le raccordement à un système de bus de terrain (2 ; 2' ; 2") et une interface de communication navigateur Web - serveur Web (8 ; 8' ; 14") formée séparément ou intégralement avec l'interface de communication serveur Web - navigateur Web (8 ; 8' ; 8"), une communication serveur Web - navigateur Web pouvant être réalisée par l'intermédiaire de l'interface de communication navigateur Web - serveur Web (8 ; 8' ; 14"),
**caractérisé**
**en ce que** l'appareil de terrain (FG2 ; FG2' ; FG2") est conçu de telle sorte que par l'intermédiaire de celui-ci, en fonctionnement, après réception d'une demande via navigateur Web concernant au moins également des informations d'au moins un autre appareil de terrain (FG1, FG3 ; FG1', FG3' ; FG1", FG3") qui, en fonctionnement, est raccordé au même système de bus de terrain (2 ; 2' ; 2") et est en liaison directe via l'interface de communication navigateur Web - serveur Web (8 ; 8' ; 14") - une interrogation des informations sollicitées par l'au moins un autre appareil de terrain (FG1, FG3 ; FG1', FG3' ; FG1", FG3") respectif peut être effectuée par l'intermédiaire de l'interface de communication serveur Web - navigateur Web (8 ; 8' ; 8") dans le cadre d'une communication de bus de terrain, **en ce que** les informations reçues par l'au moins une autre appareil de terrain (FG1, FG3 ; FG1', FG3' ; FG1 ", FG3") peuvent être intégrées dans une page Web par l'intermédiaire de l'appareil de terrain (FG2 ; FG2' ; FG2"),
et **en ce que** la page Web peut être mise à disposition par l'appareil de terrain (FG2 ; FG2' ; FG2") par l'intermédiaire de l'interface de communication navigateur Web - serveur Web (8 ; 8' ; 14"), l'appareil de terrain (FG2 ; FG2' ; FG2") formant un client et l'au moins un autre appareil de terrain (FG1, FG3 ; FG1', FG3' ; FG1", FG3") formant un serveur.
